# EUROPÄISCHE PATENTSCHRIFT

(11) **EP 1 996 907 B1**
(45) Veröffentlichungstag und Bekanntmachung des Hinweises auf die Patenterteilung: **23.09.2015**
(21) Anmeldenummer: 07711856.0
(22) Anmeldetag: 08.03.2007
(51) Int. Cl.: G01G 23/00, G01G 23/01

(54) **ELEKTRONISCHE WAAGE**
ELECTRONIC SCALES
BALANCE ELECTRONIQUE

(30) Priorität: 15.03.2006 DE 102006011791
(43) Veröffentlichungstag der Anmeldung: 03.12.2008
(73) Patentinhaber: Sartorius Lab Instruments GmbH & Co. KG, 37075 Göttingen (DE)
(72) Erfinder: RINDERMANN, Rainer, 37083 Göttingen (DE); VON STEUBEN, Jan, 37075 Göttingen (DE); PERTSCH, Thomas, 37077 Göttingen (DE); KORDES, Apolonija, 37085 Göttingen (DE)
(86) Internationale Anmeldenummer: PCT/EP2007/001998
(87) Internationale Veröffentlichungsnummer: WO 2007/104466

(56) Entgegenhaltungen:
- WO-A-02/14809
- DE-A1- 10 040 744
- DE-U1- 9 107 757
- DE-U1- 9 107 757
- US-A1- 2003 141 116

## Beschreibung

Die Erfindung bezieht sich auf eine Elektronische Waage mit einem integrierten Computer, der umfasst:
- eine Eingabeeinheit, zur Eingabe von Auswahldaten,
- einen Speicher zum Speichern einer Mehrzahl von Parameterwerten, welche in Abhängigkeit von den eingegebenen Auswahldaten funktionsspezifischen Parametern zuweisbar sind,
- eine Datenverarbeitungseinheit zur Durchführung von Wägeanwendungen in Abhängigkeit von einer Teilmenge der funktionsspezifischen Parameter,
- wenigstens eine Schnittstelle zur Wechselwirkung mit mechanischen und/oder elektronischen Komponenten in Abhängigkeit von einer Teilmenge der funktionsspezifischen Parameter,
wobei zur Anpassung an benutzer- und/oder anwendungsspezifische Vorgaben eine Mehrzahl unterschiedlicher Profile als individuelle Parameterwertesätze speicherbar ist, wobei durch Auswahl eines bestimmten Profils eine gemeinsame Zuweisung der darin enthaltenen Werte zu den entsprechenden Parametern erfolgt.

Derartige Waagen sind bekannt aus der DE 91 07 757 U1.

Elektronische Waagen verfügen über einen integrierten Computer, der unterschiedliche Aufgaben beim Betrieb der Waage übernimmt. Zum einen führt er Berechnungen aus, die zur Ermittlung eines Wägeergebnisses notwendig sind. Dies können beispielsweise die Anwendung vorgegebener Regeln auf erfasste Messwerte und/oder Kompensationsberechnungen sein, die etwa zur Berücksichtigung von Umwelteinflüssen, wie etwa der Temperatur erforderlich sind. Eine weitere Aufgabe des integrierten Computers ist es, je nach gewünschter Anwendung einen Ablaufplan vorzugeben. Moderne Wagen sind zur Durchführung unterschiedlicher Anwendungen, wie beispielsweise Rückwägung, Zählen, Tierwägung etc. in der Lage. Hierzu muss oft eine Mehrzahl von Messwerten in vorgegebener Reihenfolge erfasst und gespeichert und nach bestimmten Regeln verarbeitet werden. Die Vorgabe eines solchen Ablaufs erfolgt nach Bestimmung der auszuführenden Aufgabe durch eine Bedienperson mittels des integrierten Computers. Schließlich ist es eine weitere Aufgabe des integrierten Computers, in Wechselwirkung mit Hardware-Komponenten die Waagenmechanik und/oder -elektronik an besondere Gegebenheiten anzupassen. Dies betrifft z.B. ergonomische Einstellungen, wie etwa eine Öffnungsrichtung eines Windschutzes oder das Interfacing mit externer Hardware, wie etwa Druckern, Chipkarten-, Barcode- oder Transponder-Lesegeräten, Tastaturen oder ähnliches. Die spezielle Weise, in der der Computer agieren sollte, hängt dabei u.a. von den durchzuführenden Anwendungen, den Vorlieben des jeweiligen Benutzers, den Gegebenheiten des Aufstellungsortes und der Konfiguration der Peripherie der Waage ab. Diese Abhängigkeiten lassen sich über eine Vielzahl von Parametern definieren, denen im Einzelfall konkrete Parameterwerte zuzuweisen sind.

Um diese Zuordnung konkreter Parameterwerte zu erleichtern, ist es bekannt, für unterschiedliche Anwendungen und/oder Benutzer unterschiedliche Profile zu erstellen und zu speichern. Als Profil wird hier ein Parameterwertesatz oder eine Liste konkreter Parameterwerte bezeichnet, die durch Aufruf einer individuellen Profilkennung gemeinsam aktiviert werden können, d.h. sämtliche in dem Profil gespeicherten Parameterwerte werden den entsprechenden Parametern zugewiesen. Dabei umfasst jedes gespeicherte Profil jeweils einen Wert für jeden einstellbaren Parameter. Entsprechend groß ist der Speicherbedarf bei der Speicherung einer Mehrzahl von Profilen. Dieses Problem verschärft sich, wenn etwa nicht nur für jeden Benutzer einer Waage ein Profil gespeichert wird, sondern jeder Benutzer für jede von ihm an der Waage durchgeführte Anwendung ein gesondertes Profil speichert. Dies ist jedoch für eine komfortable Bedienung der Waage erforderlich.

Neben dem Problem des großen Speicherbedarfs ergibt sich das Problem der zeitaufwendigen und fehleranfälligen Erstellung dieser sehr großen Profile. Zwar ist es bekannt, ein Profil zu kopieren, an geeigneter Stelle zu modifizieren und unter einer neuen Kennung abzuspeichern. Dieses Verfahren kann jedoch leicht zu einer Verschleppung und Multiplikation von Fehlern in nachfolgenden Kopien des Profils führen. Im Hinblick auf die Gestaltung der Profile ähnliche Vorrichtungen sind aus der DE 100 39 668 A1 sowie der DE 100 40 744 A1 bekannt. Diese Druckschriften bieten keinen Anhalt zur Lösung der oben genannten Probleme.

Es ist die Aufgabe der vorliegenden Erfindung eine gattungsgemäße Waage derart weiterzubilden, dass eine Anpassung der Waage an unterschiedliche Anforderungen einfacher, weniger fehleranfällig und weniger speicherintensiv vorgenommen werden kann.

Diese Aufgabe wird in Verbindung mit den Merkmalen des Oberbegriffs von Anspruch 1 dadurch gelöst, dass die Parameter einer Mehrzahl nicht-überlappender Parametergruppen zugeordnet sind, jedes individuelle Profil nur solche Werte enthält, die den Parametern genau einer Parametergruppe zuweisbar sind, und jeder Parametergruppe die Parameterwerte wenigstens eines Profils zuweisbar sind.

Dies bedeutet, dass die Gesamtmenge der Parameter zunächst in Teilmengen gruppiert wird, wobei die Wahl der Gruppen vorzugsweise gemäß dem Wirkungsbereich der enthaltenen Parameter vorgenommen wird. Eine vorteilhafte Gruppeneinteilung ist beispielsweise eine Einteilung in ein Anwendungsprofil, ein Nutzerprofil und ein allgemeines Geräteeinstellungsprofil. Die dem Anwendungsprofil zugeordneten Parameter können z.B. solche sein, die Ablauf, Anzeige und Rechenregeln für bestimmte Anwendungen, wie etwa Zählen, Rückwiegen, Tierwiegen, etc. bestimmen. Parameter, die dem Nutzerprofil zugeordnet sind, können z.B. solche sein, die ergonomische Einstellungen der Waage, wie etwa Öffnungsrichtung einer Tür, Tastenbelegung, grafische Gestaltung einer Anzeige etc. betreffen Parameter, die dem allgemeinen Geräteeinstellungsprofil zugeordnet sind, können beispielsweise solche sein, die die Wechselwirkung mit einer angeschlossenen Peripherie betreffen.

Wesentliches Element der Erfindung ist, dass die unterschiedlichen Parametergruppen einander nicht überlappen, d.h. jeder Parameter ist eindeutig einer Gruppe zugeordnet. Dadurch wird es möglich, kleinere, gruppenspezifische Profile zu definieren. Ein solches, erfindungsgemäßes Profil enthält dann nur noch Werte, die nur einer Parametergruppe zuweisbar sind. Andererseits ist erfindungsgemäß für jede Parametergruppe die Speicherung wenigstens eines Profils vorgesehen.

Dies führt im Ergebnis dazu, dass kleine, funktionsspezifische Profile mit individueller Kennung gespeichert werden können. Unterschiedlichen Parametergruppen zugeordnete Profile können unabhängig voneinander aktiviert werden, wobei mit "Aktivieren" eines Profils die Zuweisung der in ihm enthaltenen Parameterwerte zu den entsprechenden Parametern gemeint ist. Zusätzlich zu der Verringerung des Speicherbedarfs führt die vorliegende Erfindung auch zu einer Reduzierung der Fehleranfälligkeit bei der Erstellung von Profilen. Bei der Erstellung bzw. Modifikation eines Profils wird der Benutzer lediglich mit denjenigen Parametern konfrontiert, die in Beziehung zu dem für ihn aktuellen Problem stehen. Er gerät nicht in Gefahr, aktuell sachfremde Parameter zu beeinflussen. Auch eine Korrektur eines erkannten Fehlers wird durch die vorliegende Erfindung wesentlich vereinfacht. Anders als beim Stand der Technik muss nämlich ein einzelner Fehler nicht in allen gespeicherten Profilen korrigiert werden, sondern lediglich in denjenigen, die der betroffenen Parametergruppe entsprechen.

Typischer Weise wird es zum bestimmungsgemäßen Betrieb der Waage erforderlich sein, dass jeder Parametergruppe auch tatsächlich auch die Werte genau eines Profils zuzuordnen sind, d.h. für jede Parametergruppe muss ein Profil aktiviert werden. Es sind jedoch auch Fälle denkbar, in denen die Aufteilung der Parametergruppen so gestaltet ist, dass z.B. bei bestimmten Anwendungen bestimmte Parameter, die in einer eigenen Gruppe zusammengefasst sind, nicht relevant sind. In einem solchen Fall wäre ein ordnungsgemäßer Betrieb der Waage auch möglich, ohne dass ein dieser Parametergruppe zugeordnetes Profil aktiviert würde.

Wie erwähnt, ist es besonders vorteilhaft, wenn in einer so genannten Anwendungs-Parametergruppe Wägeanwendungen definierende Parameter zusammengefasst sind. Dies sind solche Parameter, die anwendungsspezifische Informationen betreffen. Dies können die Auswahl bestimmter Algorithmen, die Abfolge von Verfahrensschritten eines bestimmten Wägeverfahrens und/oder Anzeigevorgaben zur Anzeige eines Messergebnisses sein.

Weiter hat sich als vorteilhaft herausgestellt, wenn vorzugsweise zusätzlich in einer so genannten Einstellungs-Parametergruppe Einstellungen der mechanischen und/oder elektronischen Komponenten definierende Parameter zusammengefasst sind. Eine solche Parametergruppen kann sämtliche die Wechselwirkung mit Hardware-Komponenten betreffende Parameter enthalten. Wenn, wie bei einer bevorzugten Weiterbildung der Erfindung vorgesehen, jedoch wenigstens eine Schnittstelle als interne Schnittstelle zur Wechselwirkung mit waageninternen, mechanischen und/oder elektronischen Bauteilen ausgelegt ist und weiter, wie bevorzugt alternativ oder zusätzlich vorgesehen, wenigstens eine Schnittstelle als eine externe Schnittstelle zur Wechselwirkung mit externen Peripheriegeräten ausgelegt ist, kann eine Unterteilung der Einstellungs-Parametergruppe erfolgen. Bei einer solchen, besonders günstigen Ausbildung der Erfindung sind in einer so genannten internen Einstellungs-Parametergruppe Einstellungen der waageninternen, mechanischen und/oder elektronischen Bauteilen definierende Parameter zusammengefasst und in einer so genannten externen Einstellungs-Parametergruppe sind Einstellungen der externen Peripheriegeräte definierende Parameter zusammengefasst. Dies entspricht einer Aufteilung der Einstellungs-Parametergruppe in eine interne und eine externe Einstellungs-Parametergruppe. Dies hat z.B. den Vorteil, dass ein Benutzer, der eine erfindungsgemäße Waage ergonomisch an seine speziellen Bedürfnisse anzupassen wünscht, nicht in Gefahr gerät, die Wechselwirkung der Waage mit einer externen Peripherie, die z.B. aus Protokollierungsgründen installiert ist, zu beeinflussen.

Vorteilhafterweise sind parametergruppenspezifische Zugriffsrechte zur Veränderung und/oder Speicherung von Profilen vergebbar. Dies ist auf Grundlage der erfindungsgemäßen Lehre besonders einfach realisierbar, da die zu vergebenden Zugriffsrechte mit den Parametergruppen gekoppelt werden können. Bei Rechtevergaben in Systemen nach dem Stand der Technik müssen hingegen die Rechte jeweils mit den einzelnen Parametern gekoppelt werden, was zu erheblichem Aufwand und zur Fehleranfälligkeit führt.

Um die Fehleranfälligkeit bei der Erstellung von Profilen weiter zu reduzieren, ist bei einer günstigen Weiterbildung der Erfindung vorgesehen, dass zur Erstellung und/oder Veränderung von Profilen eine dialogbasierte Menüführung vorgesehen ist, die einer Bedienperson zeitlich nacheinander mehrere Parameterwerte-Eingabemöglichkeiten anbietet. Bei geeigneter Vorgabe der Menüführung kann auf diese Weise verhindert werden, dass die Eingabe wesentlicher Parameter vergessen wird. Dies kann insbesondere dann erreicht werden, wenn eine Abspeicherung des erstellten bzw. modifizierten Profils nur nach vollständigem Durchlauf der Menüführung erfolgt. Eine weitere Verbesserung dieser Erfindung ist es, wenn eine angebotene Eingabemöglichkeit abhängig ist von einem zuvor eingegebenen Parameterwert. Auf diese Weise können durch geeignete Vorgabe der Menüführung widersprüchliche Parameterwerte zuverlässig unterbunden werden. Die Eingabemöglichkeiten werden somit für den Benutzer in einer Widersprüchlichkeiten vermeidenden Weise eingeschränkt.

Besonders günstig ist es, wenn nach Eingabe eines Parameterwertes ein oder mehrere weitere Parameterwerte, die sich nach vorgegebenen Regeln von dem eingegebenen Parameterwert ableiten, selbsttätig eingestellt werden. Ein Beispiel hierfür wäre die Eingabe eines Parameters, der die Anwendung "Zählen" definiert, was zu einer automatischen Einstellung eines vorgegebenen Algorithmus (z.B. Verrechnung von Messwerten) und zur Einstellung einer Anwahl-Anzeige anstelle einer Gewichts-Anzeige führen könnte.

Weitere Merkmale und Vorteile der Erfindung ergeben sich aus der nachfolgenden, speziellen Beschreibung sowie den Zeichnungen, in denen
- Figur 1:: eine beispielhafte Benutzerschnittstelle einer erfindungsgemäßen Waage zeigt;
- Figur 2:: schematisch die Datenstruktur der erfindungsgemäßen Waage zeigt;
- Figur 3:: die Datenstruktur einer Waage nach dem Stand der Technik zeigt.

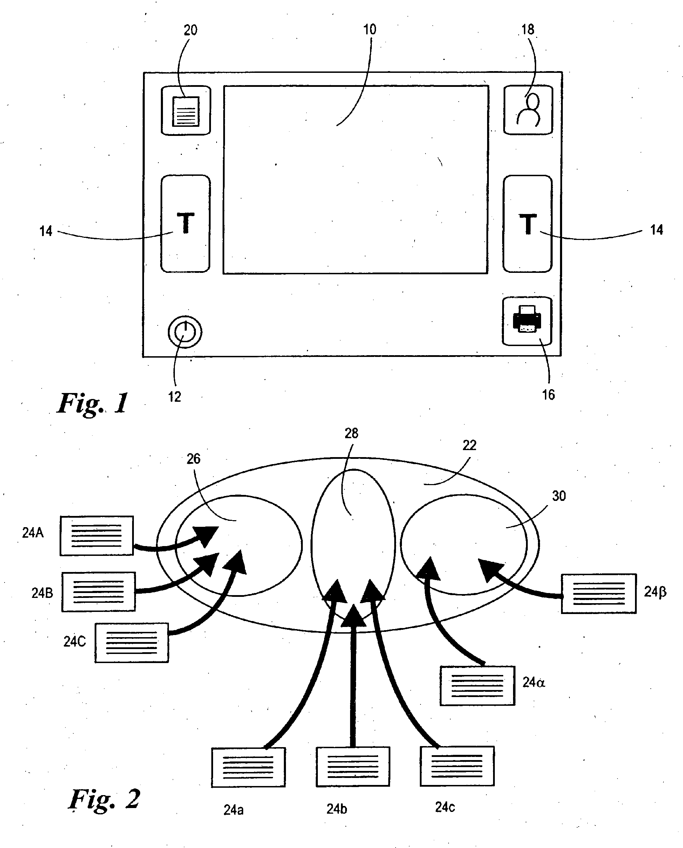

Figur 1 zeigt beispielhaft eine Benutzerschnittstelle einer erfindungsgemäßen Waage. Im Zentrum der Benutzerschnittstelle befindet sich eine Bildschirmanzeige 10, die vorzugsweise als so genannte Touch-Screen ausgestaltet ist, wobei in bekannter Weise Anzeigenbereiche kontextabhängig als Schaltfunktionsflächen belegt werden. Die Berührung einer solchen Schaltfläche wird mittels geeigneter und bekannter Sensoren erfasst und als Auswahl der entsprechenden Funktion interpretiert.

Bei der gezeigten Ausführungsform befinden sich außerhalb der Bildschirmanzeige 10 mehrere hardwaremäßig realisierte Schaltflächen. Es sind dies im vorliegenden Fall ein An-/Aus-Schalter 12, zwei Tara-Tasten 14, mit der die bei Waagen häufig verwendete Tarierungsfunktion unmittelbar aktiviert werden kann, und eine Druckertaste 16, durch deren Betätigung eine Druckfunktion eines ggf. an die Waage angeschlossenen Druckers aktiviert werden kann. Außerdem sind eine Benutzermenütaste 18 und eine Anwendungsmenütaste 20 vorgesehen. Bei Betätigung der Benutzermenütaste 18 erscheinen auf der Bildschirmanzeige Kennungen gespeicherter, als Benutzerprofile bezeichneter Parameterwertesätze, die Werten für benutzerspezifische, z.B. ergonomische Parameter enthalten und die z.B. durch Betätigung des Touch-Screens ausgewählt und aktiviert werden können. In analoger Weise werden bei Betätigung der Anwendungsmenütaste 20 Kennungen mehrerer ausführbarer Aufgaben auf der Bildschirmanzeige 10 dargestellt, die z.B. durch Betätigung des Touch-Screens ausgewählt und aktiviert werden können.

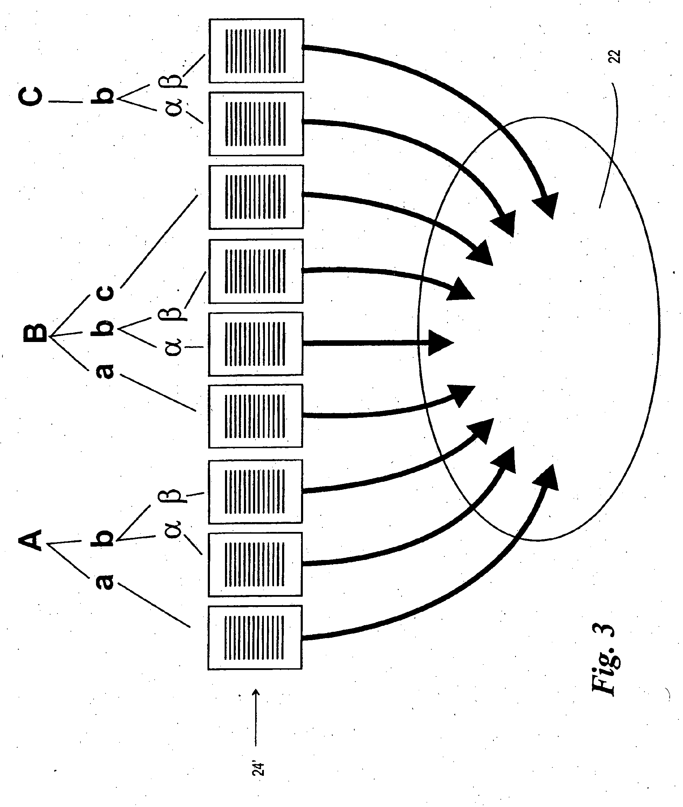

Das Wesen der vorliegenden Erfindung ergibt sich besonders deutlich durch Vergleich der Figuren 2 und 3. Während Figur 2 schematisch die Datenstruktur einer erfindungsgemäßen Waage darstellt, zeigt Figur 3 die herkömmliche Datenstruktur bei Waagen nach dem Stand der Technik. Beiden Strukturen gemeinsam ist ein Parameterraum 22, der sämtliche einstellbaren Parameter der Waage umfasst. Jeder Parameter definiert eine variierbare Funktion oder Eigenschaft der Waage. Um die durch einen Parameter definierte Funktion oder Eigenschaften zu aktivieren, muss dem Parameter ein konkreter Parameterwert zugewiesen werden. Ein Beispiel für einen ergonomischen Parameter wäre etwa die Eigenschaft der Waage, einen motorisch angetriebenen Windschutz in Anpassung an die Vorlieben eines Benutzers nach rechts oder links zu öffnen. Um die Eigenschaft "rechts" bzw. "links" zu aktivieren, muss diesem Parameter ein konkreter von zwei möglichen Werten zugewiesen werden. Ein Beispiel für einen anwendungsspezifischen Parameter wäre beispielsweise die Anzeige der physikalischen Einheit eines Wägeergebnisses. Je nach konkreter Anwendung kann die Anzeige einer Masse (z.B. mg bei normalem Wiegen), einer Stückzahl (z.B. bei Zählanwendungen) oder die Angabe einer Dichte (z.B. g/cm³ bei Dichtemessungen) erforderlich sein. Die Aktivierung der tatsächlichen Option erfolgt durch Zuweisung eines konkreten Parameterwertes zu dem Anzeigenparameter.

Der Parameterraum 22 enthält eine große Vielzahl solcher und ähnlicher Parameter. Um die Einstellung der Waage, d.h. die Zuweisung konkreter Parameterwerte zu allen einzustellenden Parametern, zu erleichtern, können Profile abgespeichert werden. Die Unterschiede zwischen der erfindungsgemäßen und der bekannten Datenstruktur sollen nachfolgend an den Beispielen der Figuren 2 und 3 erläutert werden.

Hierzu sei angenommen, dass die Waage von drei verschiedenen Benutzern A, B und C mit unterschiedlichen Vorlieben und/oder Bedürfnissen benutzt werde. Beispielsweise sei A Rechtshänder und normalsichtig und B Linkshänder und normalsichtig und C Linkshänder und rot/grün-blind. Das kann heißen, dass A eine Windschutzöffnung nach rechts und zusätzlich eine monochrome Bildschirmanzeige wünscht. Weiter sei angenommen, dass die Waage in einem Labor aufgestellt sei, in dem routinemäßig drei verschiedene Wägeanwendungen a, b und c praktiziert werden, beispielsweise Tierwägung, Rückwägen und Zählen. Schließlich sei angenommen, dass der Rückwägevorgang unter zwei unterschiedlichen Protokollbedingungen α und β erfolgen kann. Beispielsweise werde entweder nur ein schriftliches Rückwägeprotokoll ausgedruckt oder es findet zusätzlich eine digitale Speicherung auf einem angeschlossenen Massenspeicher statt und die Proben werden mittels einer angeschlossenen Transponder-Leseeinheit identifiziert. Hieraus ergeben sich 18 unterschiedliche Einstellungsmöglichkeiten (Summe der Benutzer)x(Summe der Anwendungen)x(Summe der Protokollvarianten)=18. Um jede dieser Varianten zu erfassen, müssten bei einer Datenstruktur nach dem Stand der Technik 18 jeweils angemessen modifizierte Kopien des Profils 24' einer Gesamt-Parameterwerteliste unter individuellen Kennungen gespeichert werden. In der Praxis erweist sich dies jedoch als unkomfortabel, weil langwierig, fehleranfällig und speicherintensiv.

Man wird daher in der Praxis die Anfertigung von Profilen 24' auf die üblicherweise eingesetzten Varianten reduzieren. Beim Beispiel von Figur 3 sei angenommen, die Praxis habe gezeigt, dass A lediglich die Aufgaben a und b, letztere jedoch in beiden Varianten a und β durchführt, B alle Aufgaben a, b (in beiden Varianten (a und β) und c durchführt und C nur die Aufgabe b in beiden Varianten a und β durchführt. Es ist daher die Abspeicherung von neun Profilen, d.h. Profilen, erforderlich, die jeweils Werte für jeden einstellbaren Parameter enthalten.

Bei der erfindungsgemäßen Datenstruktur entsprechend Figur 2 ist jedoch vorgesehen, dass der Parameterraum 22 in drei unterschiedliche Parametergruppen 26, 28, 30 unterteilt ist. Diese Gruppen umfassen jeweils funktionsverwandte Parameter und überlappen einander nicht. Beispielsweise enthalte die Parametergruppe 26 alle benutzerspezifischen z.B. ergonomischen Parameter, die Parametergruppe 28 alle anwendungsspezifischen Parameter und die Parametergruppe 30 Hardware-spezifische Parameter. Entsprechend dieser Gruppierung können themenspezifische Profile hinterlegt werden, die gegenüber dem Stand der Technik jeweils deutlich weniger Einträge enthalten müssen als einstellbare Parameter im Parameterraum 22 enthalten sind. Vielmehr müssen Benutzerprofile 24A, 24B und 24C lediglich Werte für die Parameter der Benutzer-Parametergruppe 26 enthalten. Die Anwendungsprofile 24a, 24b und 24c enthalten nur Werte für die in der Anwendungs-Parametergruppe zusammengefassten Parameter. Die Hardwareeinstellungsprofile 24α und 24β enthalten nur Werte für die in der Parametergruppe 30 zusammengefassten Parameter zur Hardware-Einstellung. (Die Anhänge an das Bezugszeichen 24 für das Profil entsprechen in ihrer Bedeutung den Benutzern (A, B, C), Aufgaben (a, b, c) und Protokollvarianten (a, β)).

Bei dem gewählten Beispiel ist die Abspeicherung von acht Profilen erforderlich. Bei dem Beispiel von Figur 3, das sachlich dasselbe Szenario realisiert, ist die Abspeicherung von neun Profilen erforderlich. Jedes Profil 24 ist außerdem deutlich kleiner als ein Profil 24' gemäß Figur 3. Weiter lassen sich alle 18 theoretisch möglichen Varianten ohne Erstellung eines neuen Profils realisieren. Beispielsweise kann durch gleichzeitige Aktivierung der Profile 24C und 24a eine Situation erfassen, in der der Benutzer C unter Verwendung seiner persönlich bevorzugten Benutzereinstellungen die Anwendung a durchführen kann. Hierzu wäre gemäß Stand der Technik die Neuerstellung eines weiteren Profils 24' erforderlich.

Es ist daher offensichtlich, dass die erfindungsgemäße Datenstruktur zu einer deutlichen Reduzierung des Speicherbedarfs und gleichzeitig zu einer Erhöhung der Flexibilität führt. Auch die Fehleranfälligkeit bei der Profilerstellung wird reduziert, weil jeweils nur themenverwandte und daher überschaubare Profile erstellt bzw. modifiziert werden müssen.

Die Erstellung eines neuen Profils erfolgt vorzugsweise über die in Figur 1 dargestellte Benutzerschnittstelle. Hierzu werden dem Benutzer auf der Bildschirmanzeige 10 nacheinander unterschiedliche Eingabeoptionen zur Verfügung gestellt, wobei die Eingabe eines Parameterwertes die Auswahl in einem nachfolgenden Eingabeschritt in sinnvoll vorgegebener Weise beschränkt. Sich notwendig aus einer gemachten Eingabe ergebende Einstellungen weiterer Parameter können automatisch vorgenommen werden, ohne dass der Benutzer hierzu eine neue, explizite Eingabe zu machen hätte.

Natürlich stellen die in den Figuren gezeigten und in der speziellen Beschreibung erläuterten Ausführungsformen nur illustrative Ausführungsbeispiele der vorliegenden Erfindung dar. Insbesondere ist die Unterteilung des Parameterraums 22 in genau drei Parametergruppen 26, 28, 30 nicht erfindungsrelevant. Es können mehr oder weniger Parametergruppen realisiert sein, wobei die positiven Auswirkungen des erfindungsgemäßen Konzeptes mit der Anzahl der gewählten Parametergruppen steigen. Eine zu große Wahl der Anzahl von Parametergruppen kann hingegen zu einer zu großen Komplexität führen, die sich dann wieder nachteilig auf die Benutzungseffizienz auswirkt. Auch ist es möglich, den unterschiedlichen Parametergruppen unterschiedliche Zugriffshürden zuzuweisen. So kann beispielsweise die Erstellung eines Benutzerprofils, d.h. eines Parameterwertesatzes für Parameter der Benutzer-Parametergruppe 26 für jeden Benutzer möglich sein, wohingegen die Erstellung eines Hardware-Einstellungsprofils, d.h. eines Parameterwertesatzes für Parameter der Hardware-Einstellungsgruppe 30 nur speziell geschultem Personal vorbehalten bleiben kann. Die Rechteverwaltung kann in bekannter Weise auf Basis der Identifizierung -manuell oder automatisch- der unterschiedlichen Benutzer erfolgen.

## Patentansprüche

1. Elektronische Waage mit einem integrierten Computer, der umfasst:
- eine Eingabeeinheit zur Eingabe von Auswahldaten;
- einen Speicher zum Speichern einer Mehrzahl von Parameterwerten, welche in Abhängigkeit von den eingegebenen Auswahldaten funktionsspezifischen Parametern zugewiesen werden,
- eine Datenverarbeitungseinheit zur Durchführung von Wägeanwendungen in Abhängigkeit von einer Teilmenge der funktionsspezifischen Parameter,
- wenigstens eine Schnittstelle zur Wechselwirkung mit mechanischen und/oder elektronischen Komponenten in Abhängigkeit von einer Teilmenge der funktionsspezifischen Parameter,
wobei zur Anpassung an benutzer- und/oder anwendungsspezifische Vorgaben eine Mehrzahl unterschiedlicher Profile (24; 24') als individuelle Parameterwertesätze gespeichert wird, wobei durch Auswahl eines bestimmten Profils (24; 24') eine gemeinsame Zuweisung der darin enthaltenen Werte zu den entsprechenden Parametern erfolgt, **dadurch gekennzeichnet, dass** die Parameter einer Mehrzahl nicht-überlappender Parametergruppen (26, 28,30) zugeordnet sind, jedes individuelle Profil (24') nur solche Werte enthält, die den Parametern genau einer Parametergruppe (26, 28, 30) zugewiesen werden, und jeder Parametergruppe (26, 28, 30) die Parameterwerte wenigstens eines Profils (24) zugewiesen werden.

2. Waage nach Anspruch 1, **dadurch gekennzeichnet, dass** zum bestimmungsgemäßen Betrieb der Waage jeder Parametergruppe die Parameterwerte genau eines Profils zugeordnet sein müssen.

3. Waage nach einem der vorangehenden Ansprüche, **dadurch gekennzeichnet, dass** in einer Anwendungs-Parametergruppe (28) Wägeanwendungen definierende Parameter zusammengefasst sind.

4. Waage nach einem der vorangehenden Ansprüche, **dadurch gekennzeichnet, dass** in einer Einstellungs-Parametergruppe (30) Einstellungen der mechanischen und/oder elektronischen Komponenten definierende Parameter zusammengefasst sind.

5. Waage nach einem der vorangehenden Ansprüche, **dadurch gekennzeichnet, dass** wenigstens eine Schnittstelle eine externe Schnittstelle zur Wechselwirkung mit externen Peripheriegeräten ist.

6. Waage nach Anspruch 5, **dadurch gekennzeichnet, dass** in einer externen Einstellungs-Parametergruppe (30) Einstellungen der externen Peripheriegeräte definierende Parameter zusammengefasst sind.

7. Waage nach einem der vorangehenden Ansprüche, **dadurch gekennzeichnet, dass** wenigstens eine Schnittstelle eine interne Schnittstelle zur Wechselwirkung mit waageninternen, mechanischen und/oder elektronischen Bauteilen ist.

8. Waage nach Anspruch 7, **dadurch gekennzeichnet, dass** in einer internen Einstellungs-Parametergruppe (26) Einstellungen der waageninternen, mechanischen und/oder elektronischen Bauteilen definierende Parameter zusammengefasst sind.

9. Waage nach einem der vorangehenden Ansprüche, **dadurch gekennzeichnet, dass** parametergruppenspezifische Zugriffsrechte zur Veränderung und/oder Speicherung von Profilen (24) vergeben werden.

10. Waage nach einem der vorangehenden Ansprüche, **dadurch gekennzeichnet, dass** zur Erstellung und/oder Veränderung von Profilen (24) eine dialogbasierte Menüführung vorgesehen ist, die einer Bedienperson zeitlich nacheinander mehrere Parameterwerte-Eingabemöglichkeiten anbietet.

11. Waage nach Anspruch 10, **dadurch gekennzeichnet, dass** eine angebotene Eingabemöglichkeit abhängig ist von einem zuvor eingegebenen Parameterwert.

12. Waage nach einem der Ansprüche 10 oder 11, **dadurch gekennzeichnet, dass** nach Eingabe eines Parameterwertes ein oder mehrere weitere Parameterwerte, die sich nach vorgegebenen Regeln von dem eingegebenen Parameterwert ableiten, selbsttätig eingestellt werden.

## Claims

1. Electronic weighing machine with an integrated computer, which comprises:
- an input unit for the input of selection data,
- a memory for storing a plurality of parameter values which are allocated to function-specific parameters in dependence on the input selection data,
- a data processing unit for performing weighing applications in dependence on a sub-quantity of the function-specific parameters,
- at least one interface for interaction with mechanical and/or electronic components in dependence on a subset of the function-specific parameters,
wherein for adaptation to user-specific and/or application-specific specifications a plurality of different profiles (24; 24') as individual parameter value sets is stored, wherein through selection of a specific profile (24; 24') a common allocation of the values contained therein to the corresponding parameters takes place, **characterised in that** the parameters are assigned to a plurality of non-overlapping parameter groups (26, 28, 30), each individual profile (24') contains only such values as are allocated to the parameters of exactly one parameter group (26, 28, 30) and the parameter values of at least one profile (24) are allocated to each parameter group (26, 28, 30).

2. Weighing machine according to claim 1, **characterised in that**, for operation of the weighing machine as intended, the parameter values of exactly one profile have to be assigned to each parameter group.

3. Weighing machine according to one of the preceding claims, **characterised in that** parameters defining weighing applications are combined in an application parameter group (28).

4. Weighing machine according to any one of the preceding claims, **characterised in that** parameters defining settings of the mechanical and/or electronic components are combined in a settings parameter group (30).

5. Weighing machine according to any one of the preceding claims, **characterised in that** at least one interface is an external interface for interaction with external peripheral apparatus.

6. Weighing machine according to claim 5, **characterised in that** parameters defining settings of the external peripheral apparatus are combined in an external settings parameter group (30).

7. Weighing machine according to any one of the preceding claims, **characterised in that** at least one interface is an internal interface for interaction with mechanical and/or electronic components internal to the weighing machine.

8. Weighing machine according to claim 7, **characterised in that** parameters defining settings of the mechanical and/or electronic components internal to the weighing machine are combined in an internal settings parameter group (26).

9. Weighing machine according to any one of the preceding claims, **characterised in that** access rights, which are specific to parameter groups, for changing and/or storing profiles (24) are granted.

10. Weighing machine according to any one of the preceding claims, **characterised in that** a dialogue-based menu guide offering a user a plurality of parameter-value input possibilities successive in time is provided for setting up and/or changing profiles (24).

11. Weighing machine according to claim 10, **characterised in that** an offered input possibility is dependent on a previously input parameter value.

12. Weighing machine according to one of claims 10 and 11, **characterised in that** after input of a parameter value one or more further parameter values derived from the input parameter values in accordance with predetermined rules are automatically set.

## Revendications

1. Balance électronique avec un ordinateur intégré, lequel comprend :
- une unité d'entrée servant à entrer des données de sélection,
- une mémoire servant à enregistrer une multitude de valeurs de paramètre, qui sont attribuées à des paramètres spécifiques à des fonctions selon les données de sélection entrées,
- une unité de traitement de données servant à exécuter des applications de balance selon une quantité partielle des paramètres spécifiques à des fonctions,
- au moins une interface servant à interagir avec des composants mécaniques et/ou électroniques selon une quantité partielle des paramètres spécifiques à des fonctions,
sachant qu'une multitude de différents profils (24 ; 24') sont enregistrés sous la forme de jeux de valeurs de paramètres individuels aux fins de l'adaptation à des spécifications spécifiques à des utilisateurs et/ou à des applications, sachant qu'en sélectionnant un profil (24 ; 24') défini, une attribution commune des valeurs contenues dans ce dernier à des paramètres correspondants est effectuée, **caractérisée en ce que** les paramètres sont associés à une multitude de groupes de paramètres (26, 28, 30) ne se chevauchant pas, **en ce que** chaque profil (24') individuel ne contient que des valeurs, qui sont attribuées à des paramètres d'un groupe de paramètres (26, 28, 30) précisément, et **en ce que** les valeurs de paramètres au moins d'un profil (24) sont attribuées à chaque groupe de paramètres (26, 28, 30).

2. Balance selon la revendication 1, **caractérisée en ce que** les valeurs de paramètre d'un profil précisément doivent être attribuées à chaque groupe de paramètres aux fins du fonctionnement de la balance conforme à son usage.

3. Balance selon l'une quelconque des revendications précédentes, **caractérisée en ce que** des paramètres définissant des applications de balance sont rassemblés dans un groupe de paramètres d'application (28).

4. Balance selon l'une quelconque des revendications précédentes, **caractérisée en ce que** des paramètres définissant des réglages des composants mécaniques et/ou électroniques sont rassemblés dans un groupe de paramètres de réglage (30).

5. Balance selon l'une quelconque des revendications précédentes, **caractérisée en ce qu'**au moins une interface est une interface externe servant à interagir avec des appareils périphériques externes.

6. Balance selon la revendication 5, **caractérisée en ce que** des paramètres définissant des réglages des appareils périphériques externes sont rassemblés dans un groupe de paramètres de réglage (30) externe.

7. Balance selon l'une quelconque des revendications précédentes, **caractérisée en ce qu'**au moins une interface est une interface interne servant à interagir avec des éléments mécaniques et/ou électroniques internes à la balance.

8. Balance selon la revendication 7, **caractérisée en ce que** des paramètres définissant des réglages des éléments mécaniques et/ou électroniques internes à la balance sont rassemblés dans un groupe de paramètres de réglage (26) interne.

9. Balance selon l'une quelconque des revendications précédentes, **caractérisée en ce que** des droits d'accès spécifiques à des groupes de paramètres sont affectés aux fins de la modification et/ou de l'enregistrement de profils (24).

10. Balance selon l'une quelconque des revendications précédentes, **caractérisée en ce qu'**une navigation de menu basée sur des boîtes de dialogue est prévue aux fins de la création et/ou de la modification de profils (24), laquelle offre à un utilisateur successivement dans le temps plusieurs possibilités d'entrée de valeurs de paramètre.

11. Balance selon la revendication 10, **caractérisée en ce qu'**une possibilité d'entrée offerte dépend d'une valeur de paramètre entrée au préalable.

12. Balance selon l'une quelconque des revendications 10 ou 11, **caractérisée en ce qu'**une ou plusieurs valeurs de paramètre supplémentaires, qui découlent, selon des règles spécifiées, de la valeur de paramètre entrée, sont réglées de manière autonome après l'entrée d'une valeur de paramètre.
